# EUROPEAN PATENT APPLICATION

(11) **EP 4 831 265 A1**
(43) Date of publication of application: **28.10.2026**
(21) Application number: 26160532.3
(22) Date of filing: 24.02.2026
(51) Int. Cl.: C10J 3/48, C10J 3/80, C10J 3/84, C10K 1/00, C10K 1/02, C10K 1/12, C10K 3/02

(54) **ENERGY-SAVING AND HIGH-EFFICIENCY BIOMASS GASIFICATION AND CATALYTIC CONVERSION DEVICE**

(30) Priority: 22.04.2025 CN 202510509646
(71) Applicant: Tsinghua University, Beijing 100084 (CN); Beijing Aptblaze Technology Co., Ltd., Beijing 100085 (CN)
(72) Inventor: ZHANG, Yanguo, Beijing, 100084 (CN); ZHOU, Hui, Beijing, 100084 (CN); BIE, Xuan, Beijing, 100084 (CN); CHEN, Xuan, Beijing, 100085 (CN)
(74) Representative: Bryn Aarflot AS

(57) **Abstract**

The present disclosure discloses an energy-saving and high-efficiency biomass gasification and catalytic conversion device, and is used to solve the problems of complex process, low conversion efficiency, and thermal energy waste in biomass gasification in existing technologies. The gasification and catalytic conversion device of the present disclosure comprises a feeding unit, a gasifier, a high-temperature dust removal bag, a decomposition furnace, and air distribution components. The discharge port of the feeding unit is connected to the feed port of the gasifier. The gas outlet of the gasifier is directly connected to the gas inlet of the high-temperature dust removal bag. The gas outlet of the high-temperature dust removal bag is directly connected to the gas inlet of the decomposition furnace. The air distribution components are arranged at the bottom of the gasifier and located above the slag discharge port of the gasifier.

## Description

### TECHNICAL FIELD

The present disclosure belongs to the technical field of biomass processing, and particularly relates to an energy-saving and high-efficiency biomass gasification and catalytic conversion device.

### BACKGROUND

As a natural energy-storing renewable resource, biomass, besides direct combustion for energy, is primarily utilized by gasifying it into syngas, which is then used for energy applications (e.g., gas boilers, internal combustion engines, or gas turbines) and resource utilization (e.g., producing green hydrogen, green methanol, or sustainable aviation fuel).

Existing biomass gasification devices typically include a gasifier, a cooling heat exchanger, a bag filter, a heater, and a decomposition furnace connected sequentially along the gas flow direction. It should be noted that the gas needs to be cooled before bag filtration, and efficient catalytic reaction of the gas requires reheating after cooling and dust removal.

Clearly, the process using the aforementioned biomass gasification device is relatively complex, wastes a large amount of thermal energy, and leads to energy inefficiency.

### SUMMARY

Based on the above analysis, the present disclosure aims to provide an energy-saving and high-efficiency biomass gasification and catalytic conversion device to solve the problems of complex process, low conversion efficiency, and thermal energy waste in existing biomass gasification technologies.

The purpose of the present disclosure is mainly achieved through the following technical solutions.

The present disclosure provides an energy-saving and high-efficiency biomass gasification and catalytic conversion device, comprising a feeding unit, a gasifier, a high-temperature dust removal bag, a decomposition furnace and air distribution components; the discharge port of the feeding unit is connected to the feed port of the gasifier; the gasifier is a turbulent bed gasifier, and its gas outlet is directly connected to the gas inlet of the high-temperature dust removal bag; the gas outlet of the high-temperature dust removal bag is directly connected to the gas inlet of the decomposition furnace; the air distribution components are arranged at the bottom of the gasifier and located above the slag discharge port of the gasifier.

Further, the gasifier comprises a first constant diameter section, a first expansion diameter section, a second constant diameter section, a second expansion diameter section, a third constant diameter section, a first contraction diameter section and a fourth constant diameter section, which are connected along the gas flow direction.

Further, the inner diameter of the first constant diameter section is less than the inner diameter of the second constant diameter section, the inner diameter of the second constant diameter section is less than the inner diameter of the fourth constant diameter section, and the inner diameter of the fourth constant diameter section is less than the inner diameter of the third constant diameter section.

Further, the air distribution components are arranged in the first expansion diameter section, and the discharge port of the feeding unit communicates with the second expansion diameter section.

Further, the biomass gasification and catalytic conversion device further comprises steam nozzles arranged on the side wall of the second expansion diameter section.

Further, the steam nozzles are embedded in the side wall of the second expansion diameter section.

Further, the biomass gasification and catalytic conversion device further comprises first oxygen supplement nozzles and second oxygen supplement nozzles.

The first oxygen supplement nozzles are located on the side wall of the first contraction diameter section.

The second oxygen supplement nozzles are located at the connection between the first contraction diameter section and the fourth constant diameter section.

Further, the biomass gasification and catalytic conversion device further comprises third oxygen supplement nozzles located at the gas inlet of the decomposition furnace.

Further, the biomass gasification and catalytic conversion device further comprises a waste heat utilization component arranged at the gas outlet of the decomposition furnace.

Further, the feeding unit comprises a feed hopper, a primary screw feeder, a sealed rotary discharge plate and a secondary screw feeder, which are sequentially connected along the biomass movement direction.

Compared with the prior art, the present disclosure can achieve at least one of the following beneficial effects:
A) The energy-saving and high-efficiency biomass gasification and catalytic conversion device provided by the present disclosure directly uses a high-temperature dust removal bag to perform high-temperature dust removal on the gas generated by the gasifier after biomass gasification and before feeding into the decomposition furnace. Since the high-temperature dust removal bag can withstand high working temperatures (700°C-900°C), there is no need to cool the gas generated by gasification. Instead, high-temperature dust removal can be performed directly, and the gas after high-temperature dust removal can be directly introduced into the decomposition furnace without reheating. This effectively simplifies the biomass gasification catalytic process and avoids thermal energy waste.
B) The energy-saving and high-efficiency biomass gasification and catalytic conversion device provided by the present disclosure can omit the cooling heat exchanger and heater while also reducing energy waste. Therefore, in practical applications, even if the investment in the high-temperature dust removal device is greater than that of a low-temperature bag filter, it can still significantly reduce the initial investment and operating costs of the biomass gasification catalytic system.

In the present disclosure, the above technical solutions can also be combined to achieve more preferred combination solutions. Other features and advantages of the present disclosure will be described in the following description, and some advantages will become apparent from the description or be understood through the implementation of the present disclosure. The purposes and other advantages of the present disclosure can be achieved and obtained through the embodiments described in the specification and the content specifically indicated in the drawings.

### BRIEF DESCRIPTION OF THE DRAWINGS

The drawings are only for the purpose of illustrating specific embodiments and are not intended to limit the present disclosure. Throughout the drawings, the same reference symbols denote the same components.
FIG. 1 is a structural schematic diagram of the energy-saving and high-efficiency biomass gasification and catalytic conversion device provided by Embodiment 1 of the present disclosure;
FIG. 2 is a front view of the air distribution component in the energy-saving and high-efficiency biomass gasification and catalytic conversion device provided by Embodiment 2 of the present disclosure;
FIG. 3 is a side view of the air distribution component in the energy-saving and high-efficiency biomass gasification and catalytic conversion device provided by Embodiment 2 of the present disclosure;

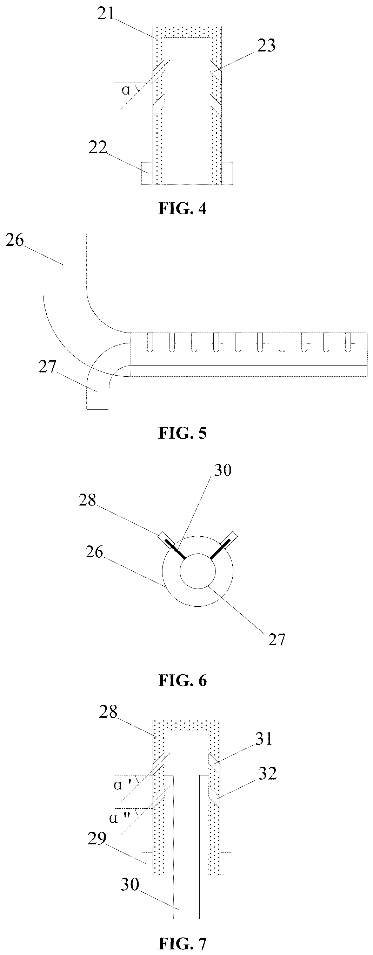

FIG. 4 is a structural schematic diagram of the mixing air cap in the energy-saving and high-efficiency biomass gasification and catalytic conversion device provided by Embodiment 2 of the present disclosure;
FIG. 5 is a front view of the air distribution component in the energy-saving and high-efficiency biomass gasification and catalytic conversion device provided by Embodiment 3 of the present disclosure;
FIG. 6 is a side view of the air distribution component in the energy-saving and high-efficiency biomass gasification and catalytic conversion device provided by Embodiment 3 of the present disclosure;
FIG. 7 is a structural schematic diagram of the mixing air cap in the energy-saving and high-efficiency biomass gasification and catalytic conversion device provided by Embodiment 3 of the present disclosure;

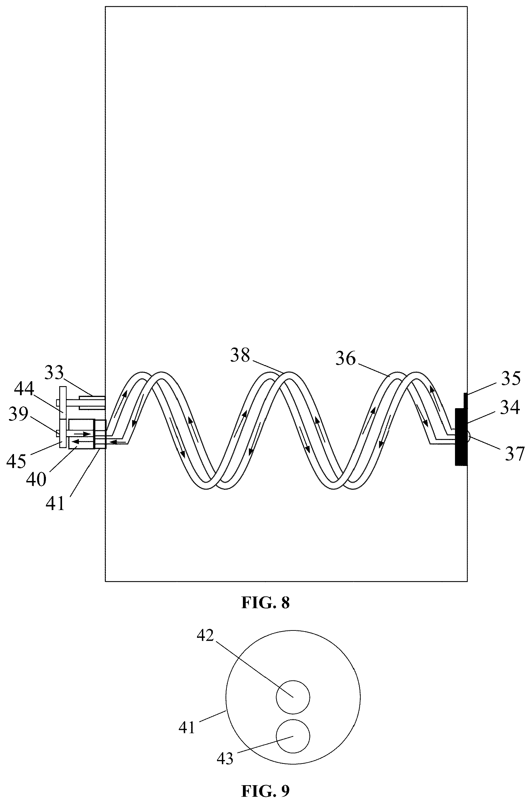

FIG. 8 is a structural schematic diagram of the waste heat utilization component in the energy-saving and high-efficiency biomass gasification and catalytic conversion device provided by Embodiment 4 of the present disclosure;
FIG. 9 is a structural schematic diagram of the rotating disc in the energy-saving and high-efficiency biomass gasification and catalytic conversion device provided by Embodiment 4 of the present disclosure.

### Reference Numerals:

1 - high-temperature dust removal bag; 2 - decomposition furnace; 3 - feed hopper; 4 - primary screw feeder; 5 - sealed rotary discharge plate; 6 - secondary screw feeder; 7 - first constant diameter section; 8 - first expansion diameter section; 9 - second constant diameter section; 10 - second expansion diameter section; 11 - third constant diameter section; 12 - first contraction diameter section; 13 - fourth constant diameter section; 14 - steam nozzle; 15 - first oxygen supplement nozzle; 16 - second oxygen supplement nozzle; 17 - third oxygen supplement nozzle; 18 - waste heat utilization component; 19 - mixing outer pipe; 20 - mixing inner pipe; 21 - mixing air cap; 22 - mixing thread; 23 - mixing air outlet; 24 - mixing outer port; 25 - mixing inner port; 26 - independent outer pipe; 27 - independent inner pipe; 28 - independent air cap; 29 - independent thread; 30 - connecting pipe; 31 - second independent air hole; 32 - first independent air hole; 33 - driving motor; 34 - ratchet wheel; 35 - pawl; 36 - liquid inlet spiral pipe; 37 - curved connecting pipe; 38 - liquid outlet spiral pipe; 39 - rotating inner pipe; 40 - fixed outer pipe; 41 - rotating disc; 42 - liquid inlet installation port; 43 - liquid outlet installation port; 44 - driving gear; 45 - driven gear.

### DETAILED DESCRIPTION OF THE EMBODIMENTS

Below, the preferred embodiments of the present disclosure are described in detail in conjunction with the drawings. The drawings constitute a part of the present disclosure and, together with the embodiments of the present disclosure, are used to explain the principles of the present disclosure and are not intended to limit the scope of the present disclosure.

### Embodiment 1

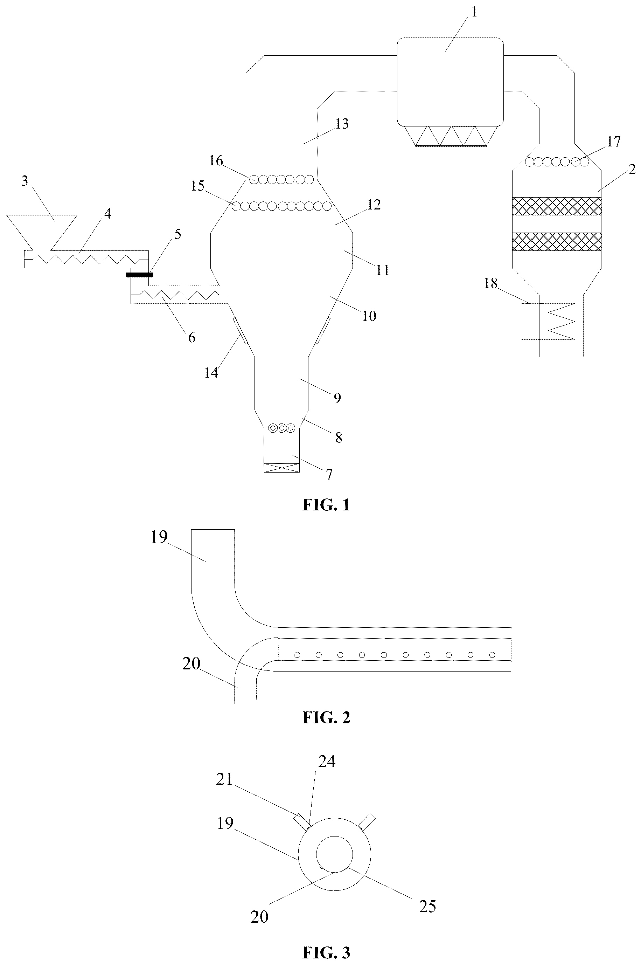

This embodiment provides an energy-saving and high-efficiency biomass gasification and catalytic conversion device. Referring to FIG. 1, it comprises a feeding unit, a gasifier, a high-temperature dust removal bag 1, a decomposition furnace 2, and air distribution components. The discharge port of the feeding unit is connected to the feed port of the gasifier. The gas outlet of the gasifier is directly connected to the gas inlet of the high-temperature dust removal bag 1 via a pipeline. The gas outlet of the high-temperature dust removal bag 1 is directly connected to the gas inlet of the decomposition furnace 2 via a pipeline. The air distribution components are arranged at the bottom of the gasifier and located above the slag discharge port of the gasifier.

Under the action of the air distribution components, biomass particles fed into the gasifier form a fluidized bed. The temperature inside the gasifier is 800°C-850°C. The biomass undergoes oxygen-limited combustion to generate CO, methane, hydrocarbons with 2-5 carbon atoms, and tar with 6-10 carbon atoms. The produced CO, methane, hydrocarbons with 2-5 carbon atoms, and tar with 6-10 carbon atoms react with the catalyst in the decomposition furnace 2, causing further decomposition of hydrocarbons with 2-5 carbon atoms and tar with 6-10 carbon atoms to generate the required small-molecule reaction gas.

Exemplarily, introducing different gases into the gasifier can yield different reaction gases. Specifically:
Introducing oxygen generates syngas as raw material for subsequent products (e.g., green hydrogen, synthetic ammonia, green methanol, or sustainable aviation fuel). Introducing oxygen and steam generates green hydrogen or synthetic ammonia. Introducing oxygen and carbon dioxide generates green methanol or sustainable aviation fuel (SAF). It should be noted that to adjust the temperature and carbon-to-hydrogen ratio and control the reaction process, steam can also be introduced along with oxygen and carbon dioxide.

Compared with the prior art, the energy-saving and high-efficiency biomass gasification and catalytic conversion device provided in this embodiment, on the one hand, directly uses a high-temperature dust removal bag 1 to perform high-temperature dust removal on the gas generated by the gasifier after biomass gasification and before feeding into the decomposition furnace 2. Since the high-temperature dust removal bag 1 can withstand high working temperatures (700°C-900°C), there is no need to cool the gas generated by gasification. Instead, high-temperature dust removal can be performed directly, and the gas after high-temperature dust removal can be directly introduced into the decomposition furnace 2 without reheating. This effectively simplifies the biomass gasification catalytic process and avoids thermal energy waste.

On the other hand, by adjusting the temperature inside the gasifier to 800°C-850°C, the volatilization of alkali metals in the biomass is significantly reduced, effectively avoiding slagging caused by alkali metals in subsequent stages. Additionally, since the gas remains at a high temperature in subsequent stages, trace volatilized alkali metals (e.g., KCl) remain in a gaseous state and move with the gas flow, also preventing slagging.

It should be noted that although the price of the high-temperature dust removal bag 1 is relatively high, the biomass gasification and catalytic conversion device can omit the cooling heat exchanger and heater while also reducing energy waste. Therefore, in practical applications, even if the investment in the high-temperature dust removal bag 1 is greater than that of a low-temperature bag filter, it can still significantly reduce the initial investment and operating costs of the biomass gasification catalytic system.

Considering that the working temperature of the high-temperature bag is 700°C-900°C, to ensure its high-temperature resistance, exemplarily, the high-temperature bag is made of stainless steel powder or nickel-based alloy powder through processes such as powder mixing, pressing, sintering, and surface coating.

For the structure of the feeding unit, exemplarily, it comprises a feed hopper 3, a primary screw feeder 4, a sealed rotary discharge plate 5, and a secondary screw feeder 6, which are sequentially connected along the biomass movement direction. This feeding unit can continuously and stably feed biomass into the gasifier while preventing gas leakage from the gasifier, ensuring that the gasifier remains under a slightly positive pressure (500 Pa-1000 Pa), avoiding negative pressure that could draw in oxygen and cause an explosion.

To improve gasification efficiency and facilitate the discharge of slag and large particles, exemplarily, the gasifier comprises a first constant diameter section 7, a first expansion diameter section 8, a second constant diameter section 9, a second expansion diameter section 10, a third constant diameter section 11, a first contraction diameter section 12, and a fourth constant diameter section 13, which are connected along the gas flow direction. Specifically, the inner diameter of the first constant diameter section 7 is less than that of the second constant diameter section 9, which is less than that of the fourth constant diameter section 13, which is less than that of the third constant diameter section 11. The air distribution components are arranged in the first expansion diameter section 8, and the feed port of the feeding unit communicates with the second expansion diameter section 10.

In this way, on the one hand, the larger inner diameter of the third constant diameter section 11 ensures sufficient gasification reaction space for the biomass, guaranteeing biomass gasification efficiency. On the other hand, the first expansion diameter section 8 and the second expansion diameter section 10 facilitate the sliding of slag and large particles along the inclined surfaces to the slag discharge port, reducing the accumulation of slag and large particles in the gasifier. Furthermore, the arrangement of the first contraction diameter section 12 and the fourth constant diameter section 13 facilitates the accelerated discharge of the gasified gas.

To adjust the gasification reaction temperature, enhance disturbance inside the gasifier, and promote heat and mass transfer, thereby improving biomass gasification rate, the energy-saving and high-efficiency biomass gasification and catalytic conversion device further comprises steam nozzles 14 arranged on the side wall of the second expansion diameter section 10. The steam sprayed from the steam nozzles 14 has a temperature of 280°C-320°C, for example, 300°C.

To reduce wear on the steam nozzles 14, the steam nozzles 14 are embedded in the side wall of the second expansion diameter section 10.

To promote the reaction and reduce tar production, the energy-saving and high-efficiency biomass gasification and catalytic conversion device further comprises first oxygen supplement nozzles 15 and second oxygen supplement nozzles 16. The first oxygen supplement nozzles 15 are located on the side wall of the first contraction diameter section 12 to supplement oxygen for the gasification reaction and increase the gasification reaction temperature. The second oxygen supplement nozzles 16 are located at the connection between the first contraction diameter section 12 and the fourth constant diameter section 13 to supplement oxygen for the reacted gas and increase its temperature.

Notably, since the gas temperature at the gasifier outlet is 840°C-860°C and the optimal catalytic temperature in the decomposition furnace 2 is 890°C-910°C, there is a certain temperature difference. To promote the catalytic reaction in the decomposition furnace 2 and increase the temperature of the gas fed into the decomposition furnace 2, the energy-saving and high-efficiency biomass gasification and catalytic conversion device further comprises third oxygen supplement nozzles 17 located at the gas inlet of the decomposition furnace 2. A small amount of oxygen is supplied through the third oxygen supplement nozzles 17 to the top of the decomposition furnace 2, causing partial combustion of the reacted gas to generate heat, thereby increasing the temperature of the gas fed into the decomposition furnace 2 and promoting the catalytic reaction in the decomposition furnace 2.

Considering that the reaction gas discharged from the decomposition furnace 2 still contains a certain amount of heat, to improve heat utilization, the energy-saving and high-efficiency biomass gasification and catalytic conversion device further comprises a waste heat utilization component 18 arranged at the gas outlet of the decomposition furnace 2. The waste heat utilization component 18 absorbs heat from the reaction gas, achieving effective waste heat utilization. The temperature of the reaction gas is reduced to 280°C-320°C (e.g., 300°C).

### Embodiment 2

This embodiment provides an energy-saving and high-efficiency biomass gasification and catalytic conversion device. Its structure is basically the same as that of the device provided in Embodiment 1, with the difference being:
To achieve mixed supply of oxygen and carbon dioxide, for the structure of an air distribution component, specifically, referring to FIG.s 2 to 4, it adopts a mixed gas supply mode, comprising a mixing outer pipe 19 and a mixing inner pipe 20 arranged inside the mixing outer pipe 19. The mixing outer pipe 19 is provided with mixing outer ports 24, and a mixing air cap 21 is arranged at each mixing outer port 24. The mixing air cap 21 is fixedly connected to the mixing outer pipe 19 via a mixing thread 22. The mixing air cap 21 is provided with mixing air outlets 23. The mixing outer port 24 communicates with the inner cavity of the gasifier through the mixing air outlets 23. The mixing inner pipe 20 is provided with mixing inner ports 25. The mixing inner pipe 20 communicates with the inner cavity of the mixing outer pipe 19 through the mixing inner ports 25.

Exemplarily, the ratio of the length of the mixing air cap 21 to the diameter of the inner cavity of the mixing air cap 21 is 4-6.

To achieve stable installation of an air distribution component, the mixing outer pipe 19 is mounted on the side wall of the gasifier.

To facilitate pipeline connection, the mixing outer pipe 19 comprises a mixing outer elbow and a mixing outer straight pipe connected sequentially along the gas flow direction. The mixing inner pipe 20 comprises a mixing inner elbow and a mixing inner straight pipe connected sequentially along the gas flow direction. The bending directions of the mixing outer elbow and the mixing inner elbow are different to connect to different gas supply tanks. The mixing inner straight pipe is located inside the mixing outer straight pipe. The mixing inner elbow penetrates the side wall of the mixing outer elbow and connects to the mixing inner straight pipe.

Exemplarily, the mixing outer elbow is connected to a carbon dioxide supply tank, and the mixing inner elbow is connected to an oxygen supply tank. Carbon dioxide flows into the mixing outer straight pipe through the mixing outer elbow. Oxygen is supplied into the mixing inner straight pipe through the mixing inner elbow and flows into the mixing outer straight pipe through the mixing inner ports 25. Oxygen and carbon dioxide are fully mixed in the mixing outer straight pipe and then flow into the gasifier through the mixing outer ports 24 to undergo gasification reaction with biomass. In this way, the air distribution component with this structure can achieve thorough mixing and simultaneous supply of two gases, improving gasification efficiency and effect.

To further improve the mixing uniformity of the two gases, the outlet directions of the mixing inner ports 25 are inclined downward, and the outlet directions of the mixing outer ports 24 are inclined upward. This extends the flow path of oxygen in the mixing outer straight pipe, allowing oxygen flowing out of the mixing inner ports 25 to fully contact and mix with carbon dioxide in the mixing outer straight pipe, further improving the mixing uniformity of the two gases.

Exemplarily, the angle α between the axial direction of the mixing air outlet 23 and the tangential direction of the mixing outer pipe 19 is 15° ≤ α ≤ 45°. This is because if α is less than 15°, the mixing air outlet 23 is biased toward the mixing outer pipe 19 and the air cap pipe, increasing the impact force of the gas flow on the pipe walls of the mixing outer pipe 19 and mixing air cap 21, which can easily cause corrosion of the mixing outer pipe 19 and mixing air cap 21. If α is greater than 45°, it can cause wear and blockage at the edge of the mixing air cap 21.

To improve the uniformity of gas supply, exemplarily, there are multiple mixing air outlets 23, which are arranged in multiple rows (e.g., 2-3 rows). The multiple rows of mixing air outlets 23 are evenly distributed along the axial direction of the mixing air cap 21. The gap between adjacent rows of mixing air outlets 23 has a ratio to the diameter of the inner cavity of the mixing air cap 21 of 1.2-1.5. In each row, multiple mixing air outlets 23 are evenly distributed along the axial direction of the mixing air cap 21.

### Embodiment 3

This embodiment provides an energy-saving and high-efficiency biomass gasification and catalytic conversion device. Its structure is basically the same as that of the device provided in Embodiment 1, with the difference being:
To achieve safe simultaneous supply of steam and oxygen, for the structure of an air distribution component, specifically, referring to FIG.s 5 to 7, it comprises an independent outer pipe 26 and an independent inner pipe 27 arranged inside the independent outer pipe 26. The independent outer pipe 26 is provided with independent outer ports, and an independent air cap 28 is arranged at each independent outer port. The independent air cap 28 is fixedly connected to the independent outer pipe 26 via an independent thread 29. The independent inner pipe 27 is provided with independent inner ports, and a connecting pipe 30 is arranged at each independent inner port. The connecting pipe 30 is inserted into the independent air cap 28, dividing the inner cavity of the independent air cap 28 into an independent outer cavity and an independent inner cavity that are isolated from each other. The side wall of the independent air cap 28 corresponding to the independent outer cavity is provided with first independent air holes 32. The independent outer pipe 26 communicates with the inner cavity of the gasifier sequentially through the independent outer channel and the first independent air holes 32. The side wall of the independent air cap 28 corresponding to the independent inner cavity is provided with second independent air holes 31. The independent inner pipe 27 communicates with the inner cavity of the gasifier sequentially through the independent inner cavity and the second independent air holes 31. In this way, the independent outer pipe 26, independent outer ports, and independent outer cavity connected sequentially along the gas flow direction serve as the oxygen supply path. The independent inner pipe 27, independent inner ports, and independent inner cavity connected sequentially along the gas flow direction serve as the steam supply path. The steam supply path and the oxygen supply path are independent of each other, enabling safe simultaneous supply of steam and oxygen, avoiding explosions caused by steam and oxygen contact during supply.

Exemplarily, the ratio of the length of the inner cavity of the independent air cap 28 to the diameter the inner cavity of the independent air cap 28 is 4-6.

To achieve stable installation of an air distribution component, the independent outer pipe 26 is mounted on the side wall of the gasifier.

To facilitate pipeline connection, the independent outer pipe 26 comprises an independent outer elbow and an independent outer straight pipe connected sequentially along the gas flow direction. The independent inner pipe 27 comprises an independent inner elbow and an independent inner straight pipe connected sequentially along the gas flow direction. The bending directions of the independent outer elbow and the independent inner elbow are different to connect to different gas supply tanks. The independent inner straight pipe is located inside the independent outer straight pipe. The independent inner elbow penetrates the side wall of the independent outer elbow and connects to the independent inner straight pipe.

In this way, the independent outer elbow is connected to an oxygen supply tank, and the independent inner elbow is connected to a steam supply tank. Oxygen flows into the independent outer straight pipe through the independent outer elbow. Steam is supplied into the independent inner straight pipe through the independent inner elbow. In this way, the air distribution component with this structure can achieve isolated and separate supply of two gases, avoiding explosions caused by steam and oxygen contact during supply.

Exemplarily, the angle α' between the axial direction of the first independent air hole 32 and the tangential direction of the independent outer pipe 26 is 15° ≤ α' ≤ 45°. This is because if α' is less than 15°, the first independent air hole 32 is biased toward the independent outer pipe 26 and the independent air cap 28, increasing the impact force of the gas flow on the pipe walls of the independent outer pipe 26 and independent air cap 28, which can easily cause corrosion of the independent outer pipe 26 and independent air cap 28. If α' is greater than 45°, it can cause wear and blockage at the edge of the independent air cap 28.

Correspondingly, exemplarily, the angle α" between the axial direction of the second independent air hole 31 and the tangential direction of the independent outer pipe 26 is 15° ≤ α" ≤ 45°. This is because if α" is less than 15°, the second independent air hole 31 is biased toward the independent outer pipe 26 and the independent air cap 28, increasing the impact force of the gas flow on the pipe walls of the independent outer pipe 26 and independent air cap 28, which can easily cause corrosion of the independent outer pipe 26 and independent air cap 28. If α" is greater than 45°, it can cause wear and blockage at the edge of the independent air cap 28.

To improve the uniformity of gas supply, exemplarily, there are multiple first independent air holes 32, which are evenly distributed along the axial direction of the independent air cap 28. There are multiple second independent air holes 31, which are evenly distributed along the axial direction of the independent air cap 28. The ratio of the gap between the first independent air holes 32 and the second independent air holes 31 to the diameter of the inner cavity of the independent air cap 28 is 1.2-1.5.

### Embodiment 4

This embodiment provides an energy-saving and high-efficiency biomass gasification and catalytic conversion device. Its structure is basically the same as that of the device provided in Embodiment 1, with the difference being:
To enhance heat transfer between the waste heat utilization component 18 and the reaction gas, for the structure of the waste heat utilization component 18, specifically, referring to FIG.s 8 to 9, it comprises a spiral heat exchange pipe. One end of the heat exchange pipe is rotatably connected to one inner wall of the decomposition furnace 2, and the other end is rotatably connected to the other inner wall of the decomposition furnace 2. The heat exchange pipe remains in a rotating state during heat exchange with the reaction gas, enhancing heat transfer through disturbance.

To achieve rotation of the heat exchange pipe, the waste heat utilization component 18 further comprises a driving motor 33 for driving the rotation of the heat exchange pipe. The driving motor 33 is arranged at the first end of the heat exchange pipe.

Notably, since alkali metal potassium inevitably volatilizes to some extent, when it encounters the lower-temperature waste heat utilization component 18, scaling may occur on the outer wall of the waste heat utilization component 18. Severe scaling may affect heat transfer. Therefore, the waste heat utilization component 18 further comprises a ratchet wheel 34 and a pawl 35 that cooperate with each other. The ratchet wheel 34 and pawl 35 are arranged on the inner wall of the decomposition furnace 2. The ratchet wheel 34 is rotatably connected to the inner wall of the decomposition furnace 2, and the pawl 35 is fixedly connected to the inner wall of the decomposition furnace 2. The second end of the heat exchange pipe is fixedly connected to the central shaft of the ratchet wheel 34. In this way, when the waste heat utilization component 18 exchanges heat with the reaction gas, the driving motor 33 drives the heat exchange pipe to rotate. The pawl 35 does not restrict the rotation of the ratchet wheel 34, and the ratchet wheel 34 and heat exchange pipe rotate freely while exchanging heat with the reaction gas. When descaling of the heat exchange pipe is required, the driving motor 33 drives the heat exchange pipe to reverse. The pawl 35 restricts the rotation of the ratchet wheel 34, causing the ratchet wheel 34 and the second end of the heat exchange pipe to change from rotatable connection to fixed connection relative to the inner wall of the decomposition furnace 2. The first end of the heat exchange pipe remains rotatably connected relative to the inner wall of the decomposition furnace 2. When the driving motor 33 rotates by a certain angle, the first end of the heat exchange pipe rotates relative to the second end by a certain angle, changing the spiral angle of the heat exchange pipe. The scaled alkali metals cannot adapt to this deformation and thus detach from the outer wall of the heat exchange pipe, achieving descaling.

For the structure of the heat exchange pipe, it comprises a liquid inlet straight pipe, an liquid inlet spiral pipe 36, a curved connecting pipe 37, an liquid outlet spiral pipe 38, and a liquid outlet straight pipe, which are sequentially connected along the coolant flow direction. The liquid inlet straight pipe and the liquid outlet straight pipe are located on the same side of the decomposition furnace 2 and arranged parallel to each other. The liquid inlet spiral pipe 36 and the liquid outlet spiral pipe 38 form a double-spiral structure. The liquid inlet straight pipe penetrates the side wall of the decomposition furnace 2 and is sealingly and rotatably connected to the decomposition furnace 2. The liquid outlet straight pipe penetrates the side wall of the decomposition furnace 2 and can rotate around the liquid inlet straight pipe.

To achieve liquid inlet through the liquid inlet straight pipe, liquid outlet through the liquid outlet straight pipe, and sealing of the decomposition furnace 2, the waste heat utilization component 18 further comprises a rotating inner pipe 39, a fixed outer pipe 40, and a rotating disc 41 arranged outside the decomposition furnace 2. The fixed outer pipe 40 is sleeved over the rotating inner pipe 39. The fixed outer pipe 40 is fixedly connected to the outer wall of the decomposition furnace 2. The rotating inner pipe 39 is sealingly and rotatably connected to the fixed outer pipe 40. The side of the fixed outer pipe 40 facing the decomposition furnace 2 is provided with a coolant accommodating recess. The outer wall of the decomposition furnace 2 is provided with a through hole. One end of the rotating disc 41 is inserted into the opening of the coolant accommodating recess and sealingly and rotatably connected to the wall of the recess. The other end of the rotating disc 41 is inserted into the through hole and sealingly and rotatably connected to through hole the through hole. The rotating disc 41 is provided with a liquid inlet installation port 42 and a liquid outlet installation port 43. The liquid inlet straight pipe penetrates the liquid inlet installation port 42 and is sealingly and rotatably connected to the rotating inner pipe 39. The liquid outlet straight pipe is sealingly and rotatably connected to the liquid outlet installation port 43. In this way, through the arrangement of the rotating inner pipe 39, fixed outer pipe 40, and rotating disc 41, sealing and rotatable connections between the liquid inlet straight pipe and the decomposition furnace 2, the liquid outlet straight pipe and the decomposition furnace 2, the liquid inlet straight pipe and the rotating inner pipe 39, and the liquid outlet straight pipe and the fixed outer pipe 40 can be achieved, while avoiding interference between the liquid inlet straight pipe, the liquid outlet straight pipe and the side wall of the decomposition furnace 2.

To avoid interference between the driving motor 33 and the fixed outer pipe 40, one end of the rotating inner pipe 39 away from the decomposition furnace 2 protrudes from the fixed outer pipe 40. The output end of the driving motor 33 is sleeved with a driving gear 44. The outer wall of the rotating inner pipe 39 is sleeved with a driven gear 45. The driving gear 44 meshes with the driven gear 45, thereby driving the inner pipe and the entire heat exchange pipe to rotate forward or reverse.

The above description is only specific embodiments of the present disclosure, but the protection scope of the present disclosure is not limited thereto. Any changes or substitutions that can be easily conceived by those skilled in the art within the technical scope disclosed in the present disclosure shall fall within the protection scope of the present disclosure.

## Claims

1. An energy-saving and high-efficiency biomass gasification and catalytic conversion device, **characterized by** comprising a feeding unit, a gasifier, a high-temperature dust removal bag, a decomposition furnace, and air distribution components, wherein a discharge port of the feeding unit is connected to a feed port of the gasifier, a gas outlet of the gasifier is directly connected to a gas inlet of the high-temperature dust removal bag, a gas outlet of the high-temperature dust removal bag is directly connected to a gas inlet of the decomposition furnace, the air distribution components are arranged at a bottom of the gasifier and located above a slag discharge port of the gasifier.

2. The energy-saving and high-efficiency biomass gasification and catalytic conversion device according to claim 1, **characterized in that** the gasifier comprises a first constant diameter section, a first expansion diameter section, a second constant diameter section, a second expansion diameter section, a third constant diameter section, a first contraction diameter section and a fourth constant diameter section, which are connected along a gas flow direction.

3. The energy-saving and high-efficiency biomass gasification and catalytic conversion device according to claim 2, **characterized in that** an inner diameter of the first constant diameter section is less than an inner diameter of the second constant diameter section, the inner diameter of the second constant diameter section is less than an inner diameter of the fourth constant diameter section, and the inner diameter of the fourth constant diameter section is less than an inner diameter of the third constant diameter section.

4. The energy-saving and high-efficiency biomass gasification and catalytic conversion device according to claim 2, **characterized in that** the air distribution components are arranged in the first expansion diameter section, and a discharge port of the feeding unit is in communication with the second expansion diameter section.

5. The energy-saving and high-efficiency biomass gasification and catalytic conversion device according to claim 2, **characterized by** further comprising steam nozzles arranged on a side wall of the second expansion diameter section.

6. The energy-saving and high-efficiency biomass gasification and catalytic conversion device according to claim 5, **characterized in that** the steam nozzles are embedded in the side wall of the second expansion diameter section.

7. The energy-saving and high-efficiency biomass gasification and catalytic conversion device according to any one of claims 2 to 6, **characterized by** further comprising first oxygen supplement nozzles and second oxygen supplement nozzles;
the first oxygen supplement nozzles are located on a side wall of the first contraction diameter section;
the second oxygen supplement nozzle are located at a connection between the first contraction diameter section and the fourth constant diameter section.

8. The energy-saving and high-efficiency biomass gasification and catalytic conversion device according to claim 7, **characterized by** further comprising third oxygen supplement nozzles located at the gas inlet of the decomposition furnace.

9. The energy-saving and high-efficiency biomass gasification and catalytic conversion device according to claim 1, **characterized by** further comprising a waste heat utilization component arranged at a gas outlet of the decomposition furnace.

10. The energy-saving and high-efficiency biomass gasification and catalytic conversion device according to claim 1, **characterized in that** the feeding unit comprises a feed hopper, a primary screw feeder, a sealed rotary discharge plate and a secondary screw feeder, which are sequentially connected along a biomass movement direction.
